# EUROPEAN PATENT APPLICATION

(11) **EP 4 369 372 A1**
(43) Date of publication of application: **15.05.2024**
(21) Application number: 22206964.3
(22) Date of filing: 11.11.2022
(51) Int. Cl.: H01H 9/00, H01H 33/668

(54) **A VACUUM INTERRUPTER, A TRANSFORMER ARRANGEMENT AND A METHOD FOR MONITORING VACUUM INTERRUPTER**

(71) Applicant: Hitachi Energy Ltd, 8050 Zürich (CH)
(72) Inventor: MATHAE, Jean Louis Gérard, 771 34 Ludvika (SE); SUNDQVIST, Per, 777 31 Smedjebacken (SE)
(74) Representative: Valea AB

(57) **Abstract**

The disclosure relates to a vacuum interrupter (1) for an on-load tap changer (10). The vacuum interrupter (1) comprises a housing (12) arranged on an axis (z) having a wall (14) enclosing a hermetically sealed inner volume (16). The wall (14) of the housing (12) comprises a first optical interface (18) between the inner volume (16) and an outer environment (20) external to the housing (12), the first optical interface (18) is configured to be transparent to at least one optical wavelength. The disclosure also relates to a transformer arrangement (2) comprising the vacuum interrupter (1) and to a method (3) for monitoring a health of the vacuum interrupter (1).

## Description

### TECHNICAL FIELD

The present invention relates to a vacuum interrupter, to a transformer arrangement comprising such a vacuum interrupter and to a method for monitoring the vacuum interrupter. In particular, it relates to a vacuum interrupter comprising an optical interface and to a transformer arrangement comprising a monitoring unit for optically monitoring the vacuum interrupter.

### BACKGROUND

A vacuum interrupter is a switching device which uses electrical contacts in a vacuum. It is used in medium-voltage circuit-breakers, generator circuit-breakers, and highvoltage circuit-breakers. Separation of the electrical contacts results in a metal vapour arc, which is quickly extinguished. During its lifetime, the occurrence of arcing between the electrical contacts will eventually degrade making and breaking properties of the vacuum interrupter.

Further, a vacuum interrupter installed in an on-load tap changer may be used as a switch, or circuit breaker, when selecting a number of turns of a transformer. The tap changer is commonly installed together with a transformer in a transformer tank. The tap changer is at least partly enclosed by the transformer tank. The transformer tank may be filled with an insulating fluid, such as mineral oil. During the lifetime of the vacuum interrupter the vacuum may be compromised. A bellows part of the vacuum interrupter can be damaged, leading to an inner volume of the vacuum interrupter being filled with the oil from the transformer tank in which the vacuum interrupter is located. The breaking and making properties of the vacuum interrupter will thereby be severely deteriorated, which may lead to shorter lifetime of the on-load tap changer. Also, the probability for arcing will increase since a distance between different potentials of the electrical contacts is usually short in a vacuum interrupter. The temperature of an arc is high and will burn part of the oil, causing carbonization of the oil and reducing its electrical insulating properties.

The harsh environment of on-load tap changers, immersed in oil and comprising large differences in electric potential, makes monitoring of the on-load tap changers and their various parts difficult. Any introduction of components in a transformer tank requires consideration of any electro-magnetic properties of the introduced component and of any existing components. Further, space inside the transformer tank is limited.

### SUMMARY

Therefore, an object of the disclosure is to provide an improved vacuum interrupter and an improved transformer arrangement comprising the vacuum interrupter, as well as an improved method for monitoring the vacuum interrupter in the transformer arrangement. In particular, an object is to enable continuous monitoring of the health of the vacuum interrupter and/or to detect a leak in the vacuum interrupter.

According to a first aspect of the present disclosure, the object is at least partly achieved by a vacuum interrupter according to claim 1.

Hence, there is provided a vacuum interrupter for an on-load tap changer. The vacuum interrupter comprises a housing arranged on an axis. The housing comprises a wall enclosing a hermetically sealed inner volume. The wall of the housing comprises a first optical interface between the inner volume and an outer environment external to the housing. The first optical interface is configured to be transparent to at least one optical wavelength.

The housing of the vacuum interrupter may be cylindrically shaped. The housing of the vacuum interrupter is hermetically sealed to enclose a vacuum. "Vacuum" is herein to be understood as a low-pressure volume, which may be maintained at around 10⁻⁵ Pa. The housing may comprise a bellows portion, which may be made of stainless steel and which may expand along the axis. The bellows portion of the housing has usually ruptured if the vacuum of the housing has been compromised.

The environment external to the housing of the vacuum interrupter depends on where the vacuum interrupter is installed. In the present disclosure, the environment external to the housing should be understood as the environment of the on-load tap changer in which the vacuum interrupter is installed. In operation, the part of the on-line tap changer where the vacuum interrupter is installed is an inside of a transformer tank. In other words, the environment external to the housing of the vacuum interrupter may be transformer oil of the transformer tank. The pressure of the oil environment is generally equal to atmospheric pressure. Therefore, leakage of the vacuum interrupter housing would quickly result in the housing being flooded with oil.

The "wall" of the housing should herein be understood as comprising different wall portions, which together constitute the housing. A wall portion may be the bellows part of the housing. Another wall portion may be a ceramic bottom part. The wall may have different thicknesses in different parts of the housing.

The housing may be arranged with at least one opening, which may be sealed by the first optical interface. The optical interface may be configured as an optical connector which may connect with other optical elements. The optical interface may be arranged with a fixation device for attaching an optical waveguide, such as an optical fibre, to the optical interface. The optical interface enables optical light of at least one wavelength to enter and/or exit the housing.

Optionally, the inner volume further comprises an optical guide being open to an environment of the inner volume and having a first guide end and a second guide end, at least the first guide end being optically connected to the first optical interface.

The optical guide should herein be understood as an optical path having the first guide end and the second guide end. The first guide end, which is optically connected to the first optical interface, is therefore also in optical communication with the second guide end.

The optical guide is open to the environment of the inner volume. If the inner volume is flooded with oil, the optical guide will also be flooded with oil.

Optionally, the second guide end comprises an optically reflective element.

The second guide end may comprise an optically reflective element, such that light which enters the optical guide from the first end, i.e. from the first optical interface, will be reflected by the reflective element and will be returned to the first optical interface.

Optionally the vacuum interrupter further comprises a second optical interface between the inner volume and the outer environment external to the housing, the second guide end being optically connected to the second optical interface.

When the second optical interface is connected to the second guide end, light entering the optical guide may exit the housing via the first optical interface and/or the second optical interface. Light entering the housing via one optical interface may exit the housing via the other optical interface.

Optionally, the optical guide is arranged recessed in relation to an inner surface of the wall of the housing.

To protect the optical properties of the first and/or second optical interfaces and the optical guide ends which are connected to either the optical interfaces or which comprise the reflective element, the optical waveguide may be recessed. As an example, the optical guide may comprise an optical path which is arranged in a recess, or groove, of the inner surface of the wall of the housing. The recessed arrangement protects against deposition of metal vapours on optical surfaces of the optical guide, which metal vapour may be produced by arcing in the inner volume of the vacuum interrupter.

Optionally, the vacuum interrupter further comprises a switch, such as a circuit breaker, coaxially arranged with the housing on the axis within the inner volume of said housing. The switch comprises a first electric contact and a second electric contact movable in relation to each other along the axis between an open position and a closed position. The vacuum interrupter further comprises a shield element coaxially arranged with the switch, and the shield element is arranged between the switch and the optical guide.

The shield element may act as a surface on which the metal vapours, produced by arcing, may deposit. In other words, the shield element provides further protection for the optical parts of the optical guide and of the optical interfaces against metal vapours produced by arcing between the first contact and the second contact.

According to a second aspect of the disclosure, the object is at least partly achieved by a transformer arrangement according to claim 7.

Hence, there is provided a transformer arrangement comprising a transformer tank comprising an insulating medium, a transformer enclosed in the transformer tank, a monitoring unit outside the transformer tank, and an on-load tap changer at least partly enclosed in the transformer tank. The on-load tap changer comprising at least one vacuum interrupter according to any one of the embodiments of the first aspect of the disclosure. The at least first and/or second optical interface of the vacuum interrupter is optically connected to the monitoring unit via at least one optical waveguide.

Such a transformer arrangement is configured to monitor a status of the vacuum interrupter by studying properties of light exiting and/or entering the housing of the vacuum interrupter.

The at least one waveguide may be an optic fibre and may be made of an insulating material, such as glass, which is unaffected by differences in electric potential, and which does not interfere with electro-magnetic fields inside the transformer tank. An optical waveguide is thus an advantageous carrier of information between any components to be monitored inside the transformer tank and the monitoring unit outside the transformer tank. The outside of the transformer tank is herein to be understood as an oil-free environment at atmospheric pressure, which environment is also free from large variations in electric potential. The environment may be a monitoring installation on-site of the transformer arrangement or it may be remote from the transformer arrangement.

The at least one waveguide may be optically connected between the first and/or second optical interface and the monitoring unit via bushings in a tank wall of the transformer tank. Alternatively, the at least one waveguide may transition between an inside of the transformer tank and an outside of the transformer tank via a part of the on-load tap changer which protrudes from the inside of the transformer tank.

Occurrence of arcing results in an intense light flash which may be detected by the monitoring unit. The monitoring unit may comprise communications device and/or a processing device and may further comprise computer storage capacity. Occurrence of arcing may thus be detected and registered and counted. It is thereby possible to monitor the status of the vacuum interrupter by studying the number of arcs that have occurred during operation of the vacuum interrupter. A large number of arcs may indicate a degraded vacuum interrupter and may suggest that the vacuum interrupter should be maintained or replaced before it fails.

If the housing is flooded with oil, the making and breaking properties of the vacuum interrupter are severely deteriorated. Flooding mat be detected by studying a property of light emitted from the monitoring unit into the inner volume of the housing and by, for instance, comparing the property to a corresponding property of light returned from the inner volume of the housing. The property is selected from properties that depend on the medium through which the light propagates. The property may be a transmission coefficient of the emitted light. A change in the transmission coefficient of the emitted light would thus be detectable and may indicate that the propagation medium in the optical guide of the inner volume has changed from near vacuum to oil.

Optionally, the monitoring unit comprises at least one optical light emitter and at least one optical light detector.

The at least one optical light emitter may be arranged to transmit an optical monitoring signal into the inner volume of the vacuum interrupter via the at least one optical waveguide and via the first optical interface and/or the second optical interface. The optical monitoring signal may comprise at least one wavelength, preferably a single wavelength. The optical monitoring signal may be emitted continuously or intermittently with a suitable predetermined interval between emissions. The optical light emitter may be selected from any suitable light emitters known in the art, such as lasers, light-emitting diodes, etc.

The at least one optical light detector may be configured to detect optical wavelengths and/or optical properties of light exiting the inner volume of the vacuum interrupter via the first and/or second optical interfaces and the at least one optical waveguide.

According to a third aspect of the disclosure, the object is at least partly achieved by a method according to claim 9

Hence there is provided a method for monitoring a health status of a vacuum interrupter according to any one of the embodiments of the first aspect of the disclosure, in a transformer arrangement according to any one of the embodiments of the second aspect of the disclosure. The method comprises:
- detecting, by the monitoring unit, an optical status signal from the inner volume of the vacuum interrupter via the first optical interface, or via the second optical interface, and via the at least one optical waveguide, and
- determining, by the monitoring unit, a property of the optical status signal to determine a health status of the vacuum interrupter.

The optical status signal is herein to be understood as an optical signal which exits the inner volume of the vacuum interrupter, and which is detected by the monitoring unit. The term "signal" in this context generally refers to any kind of detectable optical emission. Such an emission may be generated inside the housing or it may enter the housing from the outside and be detected as an emission (reflection) when it exits the housing. The optical status signal comprises an optical property that is of interest for indicating the status, or health, of the vacuum interrupter. The monitoring unit determines the property of the optical status signal. Depending on the property, the optical status signal may provide various indications on the status, or health, of the vacuum interrupter. The property, which is determined by the monitoring unit, may be exemplified by intensity, wavelength, transmission coefficient, polarity, etc.

Optionally, wherein the property of the optical status signal is intensity of white light wavelengths exceeding a predetermined intensity threshold, registering and counting, by the monitoring unit, the occurrence of the optical status signal.

If the property of the optical status signal is intensity of white light wavelengths it is an indication that an arc has occurred. Arcing is an electrical breakdown of a medium between the first and second electric contacts of the switch of the vacuum interrupter. It may be observed as an intense flash of white light wavelengths. The occurrence of the arc is then registered and counted. White light is to be understood as a combination of multiple optical wavelengths, as opposed to e.g. laser which comprises a single wavelength. The method may require the intensity to exceed a predetermined intensity threshold. However, the intensity threshold may be set relatively low since the likelihood of other white light phenomena in the inner volume of the vacuum interrupter is very low. The number of arcs may thus indicate the status, or health, of the vacuum interrupter.

Alternatively, wherein the property of the optical status signal is a duration of the optical status signal deviating from a predetermined duration, registering and counting, by the monitoring unit, the occurrence of the optical status signal.

If the duration of the optical status signal deviates from a predetermined duration, the optical status signal may be determined as an occurrence of arcing. In active monitoring, comprising emitting an optical monitoring signal into the inner volume, the duration of e.g. a pulse of the optical monitoring signal is known. It is therefore possible to discern the optical monitoring signal from other emissions from the inner volume by studying the duration of the optical status signal.

Optionally, the method further comprises emitting, by the monitoring unit, an optical monitoring signal into the inner volume of the vacuum interrupter via the at least one optical waveguide and via the first optical interface.

The emitted optical monitoring signal may enter the inner volume via the first optical interface, to be reflected by the optically reflective element and exit the inner volume via the first optical interface. Alternatively, the emitted optical monitoring signal may enter the inner volume via the first optical interface to be transmitted via the optical guide to exit the inner volume via the second optical interface. The optical monitoring signal may be emitted continuously or intermittently.

Optionally, determining the property of the optical status signal comprises determining a property of a returned monitoring signal from the inner volume.

The optical status signal may thus be a returned optical monitoring signal. A known property of the emitted optical monitoring signal may be compared to the property of the returned optical monitoring signal. A change in the property may indicate a change in the vacuum interrupter. The housing of the vacuum interrupter may for instance have been flooded by oil due to a breach of the housing. The returned optical monitoring signal would thus have propagated in oil along the optical guide, as compared to propagation through near vacuum of an intact vacuum interrupter.

Optionally, the method further comprises generating, by the monitoring unit an alert of a leakage of the vacuum interrupter housing if the property of the returned optical monitoring signal exceeds a threshold value.

An alert may for instance be an indication on a display, an audible signal, a notification to a handheld communications device, etc. The threshold value may be selected to ensure that the property change indicates a leakage of the housing of the vacuum interrupter.

Optionally, the property of the returned optical monitoring signal is a transmission coefficient of the emitted optical monitoring signal.

A changed transmission coefficient indicates that the emitted monitoring signal has propagated through a medium different from the waveguide or the near vacuum of the inner volume of the housing of the vacuum interrupter.

### BRIEF DESCRIPTION OF THE DRAWINGS

Further objects and advantages of, and features of the disclosure will be apparent from the following description of one or more embodiments, with reference to the appended drawings, where:
- Fig. 1: conceptually shows an example of an on-load tap changer.
- Fig. 2: shows a detailed view of the on-load tap changer of Fig. 1.
- Fig. 3: shows a basic switching function of a vacuum interrupter.
- Fig. 4: is a perspective view of a vacuum interrupter according to a first aspect of the disclosure.
- Figs 5-6: show cross-sectional views of a vacuum interrupter according to the first aspect of the disclosure
- Fig. 7-8: show partial cross-sectional views of a vacuum interrupter according to the first aspect of the disclosure
- Fig. 9: shows a transformer arrangement according to a second aspect of the disclosure.
- Fig. 10: shows a flowchart of a method according to a third aspect of the disclosure.

### DETAILED DESCRIPTION OF EXAMPLE EMBODIMENTS OF THE INVENTION

The present disclosure is developed in more detail below referring to the appended drawings which show examples of embodiments. The disclosure should not be viewed as limited to the described examples of embodiments. Like numbers refer to like elements throughout the description.

The terminology used herein is for the purpose of describing particular aspects of the disclosure only and is not intended to limit the invention. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which this disclosure belongs.

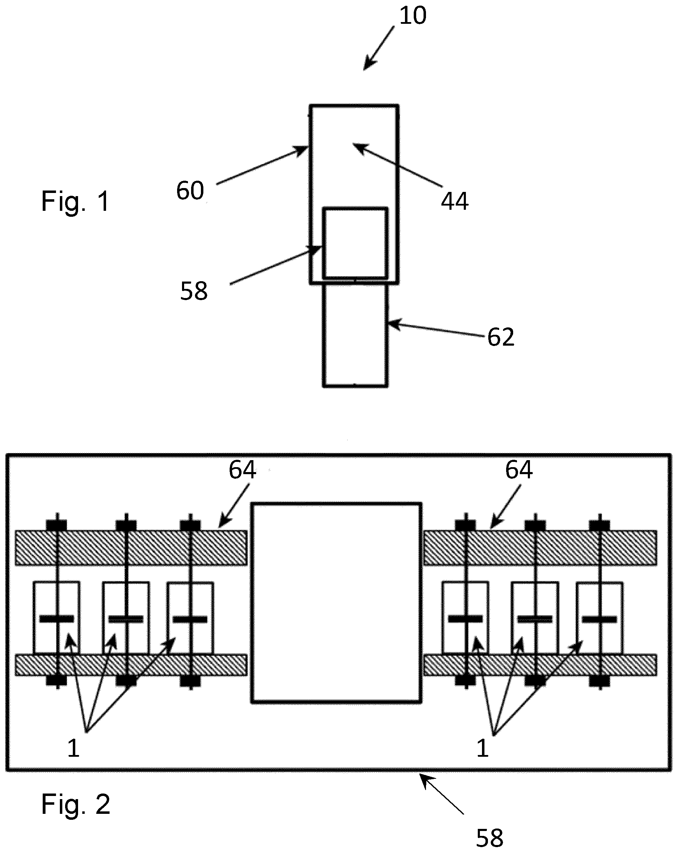

The disclosure provides a vacuum interrupter 1 for an on-load tap changer 10, a transformer arrangement 2 comprising the vacuum interrupter 1 and method 3 for monitoring a status of the vacuum interrupter 1 of the on-load tap changer 10, hereinafter referred to as an OLTC. **Fig. 1** shows an example of a vacuum-type OLTC 10 with **Fig. 2** showing a zoomed-in view of a diverter switch 58. In the example, it is shown that the OLTC 10 has a housing 60 with insulating medium 44, a diverter switch 58, and a tap selector 62. The zoomed-in diverter switch 58 shows a white square in the middle. The white square represents parts of the diverter switch 58 which are not necessary to show for the purposes of this disclosure. On the sides of the white square, vacuum interrupters 1 are illustrated. There are three vacuum interrupters 1 - one for each phase in the illustrated example. The vacuum interrupters 1 are opened and closed by a yoke 64. Opening all three vacuum interrupters 1 at the same time is an example of how to open and close the vacuum interrupters 1. Other ways are possible.

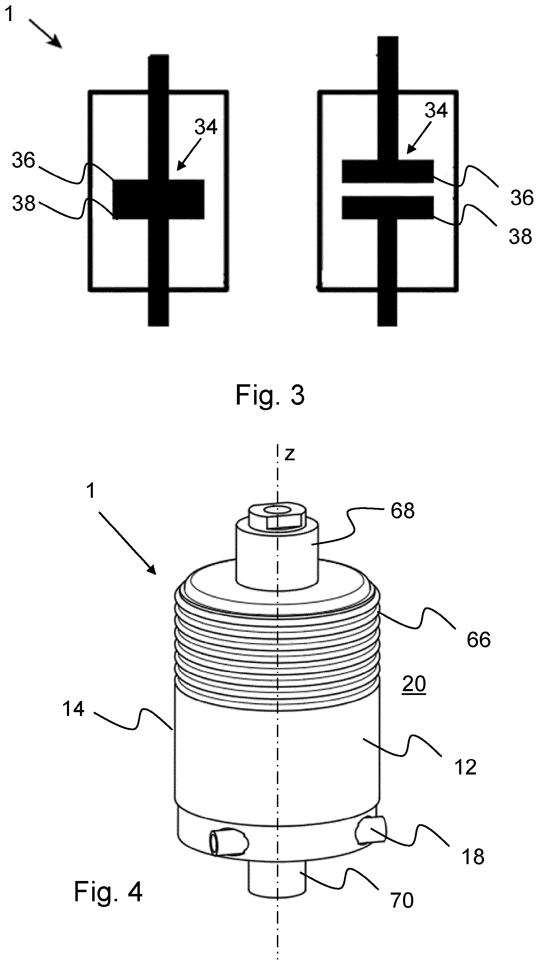

In **Fig. 3****,** an example vacuum interrupter 1 is conceptually shown comprising a switch 34 in a closed position to the left and an open position to the right. A first contact 36 and a second contact 38 abut in the closed position and are separated in the open position.

**Figs 4-8** depict views a vacuum interrupter 1 according to the first aspect of the disclosure. The vacuum interrupter 1 comprises a housing 12 arranged on an axis z having a wall 14. The housing 12 may comprise a bellows portion 66, which may be made of stainless steel and which may expand and contract along the axis z as the switch 34 is open and closed, respectively, by moving the yoke 64, as shown in **Fig. 2****.** The vacuum interrupter 1 may further comprise a first fixation point 68 and a second fixation point 70 for electrically and mechanically connecting the vacuum interrupter 1 to other components, such as an OLTC 10. In the example shown in **Fig. 1****,** the first fixation point is connected to the movable yoke 64.

**Fig. 4** shows a cross-sectional view of the vacuum interrupter 1 of **Fig.3****,** where it is also shown that the wall 14 encloses a hermetically sealed inner volume 16. The inner volume 16 may comprise a near vacuum at a pressure around 10⁻⁵ Pa. The wall 14 of the housing 12 comprises a first optical interface 18 between the inner volume 16 and an outer environment 20 external to the housing 12. The first optical interface 18 is configured to be transparent to at least one optical wavelength.

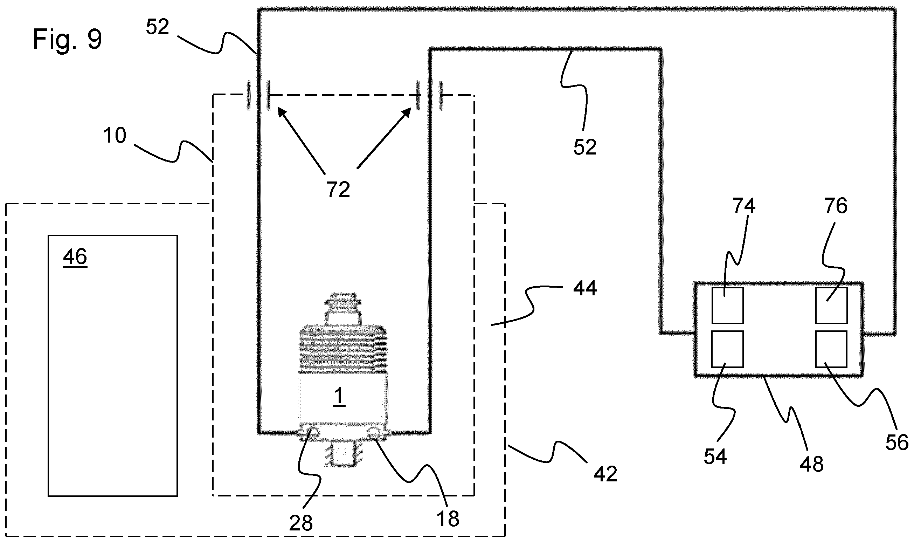

The nature of the environment 20 external to the housing 12 of the vacuum interrupter 1 depends on where the vacuum interrupter 1 is installed. In the present disclosure, the environment 20 external to the housing 12 should be understood as the environment of the OLTC 10 in which the vacuum interrupter is installed 1. In operation, the part of the OLTC where the vacuum interrupter 1 is installed is an inside of a transformer tank 42 (see **Fig. 9****,** to be described in more detail below). In other words, the environment 20 external to the housing of the vacuum interrupter may be insulating fluid of the transformer tank 42, e.g. transformer oil 44 of the transformer tank. The pressure of the environment 20 is of the magnitude of atmospheric pressure. Therefore, leakage of the vacuum interrupter housing 12 would quickly result in the housing 12 being flooded with transformer oil 42.

The housing 12 may be arranged with at least one opening, which may be sealed by the first optical interface 18. The optical interface 18 may be configured as an optical connector which may connect with other optical elements. The optical interface may be arranged with a fixation device for attaching an optical waveguide 52, such as an optical fibre, to the optical interface 18 (to be further explained below. The optical interface 18 enables optical light of at least one wavelength to enter and/or exit the housing 12.

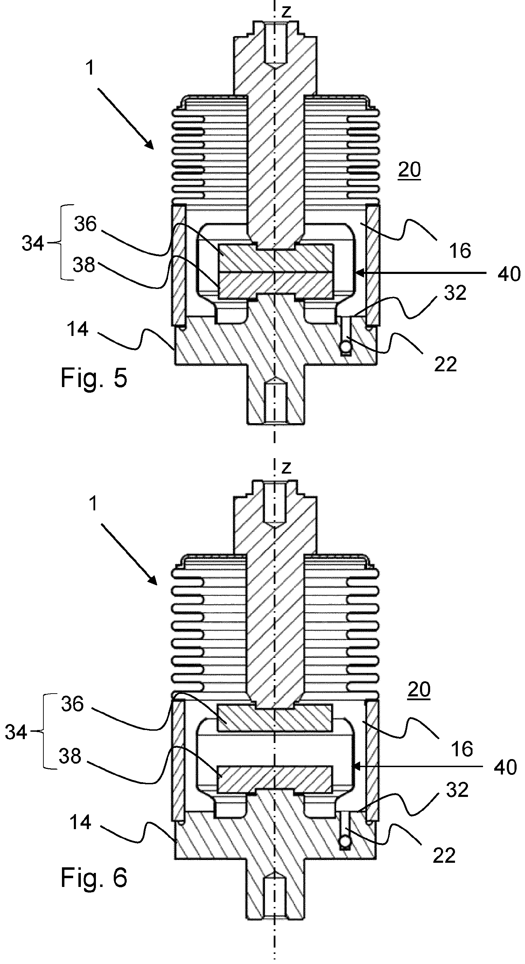

As shown in the cross-sectional views of **Figs 5-8****,** the inner volume 16 further comprises an optical guide 22 being open to an environment of the inner volume 16 such that if the inner volume 16 is flooded with oil 44, the optical guide 22 will also be flooded with oil 44. The optical guide 22 has a first guide end 24 and a second guide end 26. The first guide end 24 is optically connected to the first optical interface 18. The optical guide 22 may be provided as an optical path comprising the first guide end 24 and the second guide end 26. The first guide end 24, which is optically connected to the first optical interface 18, is therefore also in optical communication with the second guide end 26.

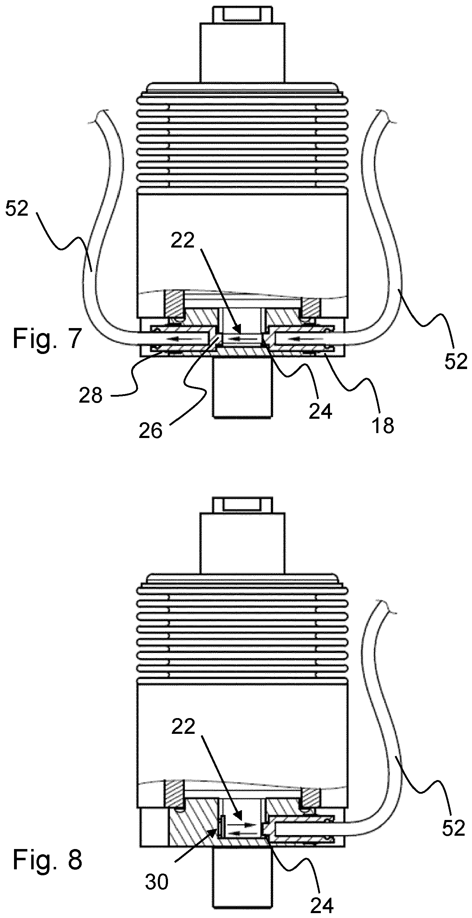

The second guide end 26 may comprise an optically reflective element 30 (Fig. 8), such that light which enters the optical guide 22 from the first end 24, i.e. from the first optical interface 18, will be reflected by the reflective element 30 and will be returned to the first optical interface 18, as indicated by the arrows of **Fig. 8****,** such that the light may exit the housing 12 via the first optical interface 18.

Alternatively, as shown in **Fig. 7****,** the vacuum interrupter 1 may comprise a second optical interface 28 between the inner volume 16 and the outer environment 20 external to the housing 12. The second guide end 26 is in this configuration optically connected to the second optical interface 28. Thereby, when the second optical interface 28 is connected to the second guide end 26, light entering the optical guide 22 may exit the housing 12 via the first optical interface 18 and/or the second optical interface 28. Light entering the housing 12 and the optical guide 22 via one optical interface 18, 28 may exit the housing 12 via the other optical interface 18, 28.

**Figs 5-6** show that the optical guide 22 may be arranged recessed in relation to an inner surface 32 of the wall 14 of the housing 12. This provides protection for the first and/or second optical interfaces 18, 28 and the first and second optical guide ends 24, 26 which are connected to either the first and second optical interfaces 18, 28 or which comprise the reflective element 30. As an example, the optical guide 22 may comprise an optical path which is arranged in a recess, or groove, of the inner surface 32 of the wall 14 of the housing 12. The recessed arrangement protects against deposition of metal vapours on optical surfaces of optical components in inside the inner volume 16, which metal vapour may be produced by arcs occurring in the inner volume 16 of the vacuum interrupter 1.

As exemplified in **Figs 5-6****,** the vacuum interrupter 1 may further comprise the switch 34, which was briefly described in conjunction with **Fig. 3****,** coaxially arranged with the housing 12 on the axis z within the inner volume 16 of said housing 12. The switch 34 comprises a first electric contact 34 and a second electric contact 36 movable in relation to each other along the axis z between an open position and a closed position. **Fig. 5** illustrates the closed position of the switch 34 and **Fig. 6** illustrates the open position of the switch 34. The vacuum interrupter 1 further comprises a shield element 40 coaxially arranged with the switch 34. The shield element 40 is arranged between the switch 34 and the optical guide 22. The shield element 40 may thereby act as a protecting surface on which the metal vapours, produced by arcs between the first electric contact 36 and the second electric contact 38, may deposit. In other words, the shield element 40 provides further protection for the optical parts of the optical guide 22 and of the optical interfaces 18, 28 against metal vapours produced by such arcs.

In the illustrated example of **Figs 5-6****,** the shield element is tubular and forms a cupshaped volume together with the inner surface 32 of the wall 14 in relation to which the optical guide is recessed. In relation to the axis z, when seen as a vertical axis, the cupshaped volume is closed downwards since an interface between the shield element 40 and the inner surface 32 is closed. The optical guide 22 is located radially outside the shield element 40 in relation to the switch 34, which is located radially inside the shield element 40. The shield element 40 is open upwards to allow opening and closing movement of the switch 34 along the axis z. Thereby the optical guide 22 is protected from metal vapours in that any metal vapours are force to diffuse first upwards, radially inside the shield element 40 and then downwards, radially outside the shield element 40 in order to reach the optical guide 22.

**Fig. 9** illustrates a transformer arrangement 2 according to the second aspect of the disclosure. **Fig. 9** symbolically shows the various parts of the transformer arrangement 2 and is not drawn to scale. The transformer arrangement 2 comprises a transformer tank 42 comprising an insulating medium 44, such as mineral oil. A transformer 46 is enclosed in the transformer tank 42. A monitoring unit 48 is located outside the transformer tank 42, and an on-load tap changer 10 is at least partly enclosed in the transformer tank 42. The on-load tap changer 10 comprises at least one vacuum interrupter 1 according to any one of the embodiments of the first aspect of the disclosure. The at least first and/or second optical interfaces 18, 28 of the vacuum interrupter 1 are optically connected to the monitoring unit 48 via at least one optical waveguide 52.

The transformer arrangement 2 according to the second aspect of the disclosure is configured to monitor a status of the vacuum interrupter 1 by studying properties of light exiting and/or entering the housing 12 of the vacuum interrupter 1.

The at least one waveguide 52 may be an optic fibre and may be made of an insulating material, such as glass, which is unaffected by differences in electric potential, and which does not interfere with electro-magnetic fields inside the transformer tank 42. An optical waveguide 52 is thus an advantageous carrier of information between any components to be monitored, such as the vacuum interrupter 1, inside the transformer tank 42 and the monitoring unit 48 outside the transformer tank 42.

The at least one waveguide 52 may be optically connected between the first and/or second optical interface 18, 28 and the monitoring unit 48 via bushings 72 in a tank wall of the transformer tank 42. Alternatively, the at least one waveguide 52 may transition between an inside of the transformer tank 42 and an outside of the transformer tank 42 via a part of the on-load tap changer 10 which protrudes from the inside of the transformer tank 42.

Occurrence of arcing results in an intense light flash which may be detected by the monitoring unit 48. The monitoring unit 48 may comprise a communications device 74 and/or a processing device 76 and may further comprise computer storage capacity (not shown). Occurrence of arcing may thus be detected and registered and counted. It is thereby possible to monitor the status of the vacuum interrupter 1 by studying the number of arcs that have occurred during operation of the vacuum interrupter 1. A large number of arcs may indicate a degraded vacuum interrupter 1 and may suggest that the vacuum interrupter 1 should be maintained or replaced before it fails.

If the housing 12 is flooded with oil, the making and breaking properties of the vacuum interrupter 1 are severely deteriorated. Flooding may for instance be detected by comparing a property of light emitted from the monitoring unit 48 into the inner volume 16 of the housing 12 and, with a corresponding property of light returned from the inner volume 16 of the housing 12. The property is selected from properties which depend on, and are affected by, the medium through which the light propagates. The property may be a transmission coefficient of the emitted light. A change in the transmission coefficient of the emitted light would thus be detectable and may indicate that the propagation medium in the optical guide 22 of the inner volume 16 has changed from near vacuum to oil.

The monitoring unit 48 may comprise at least one optical light emitter 54 and at least one optical light detector 56.

The at least one optical light emitter 54 may be arranged to transmit an optical monitoring signal into the inner volume 16 of the vacuum interrupter 1 via the at least one optical waveguide 52 and via the first optical interface 18 and/or the second optical interface 28. The optical monitoring signal may comprise at least one wavelength. The optical monitoring signal may be emitted continuously or intermittently with a suitable predetermined interval between emissions. The optical light emitter 54 may be selected from any suitable light emitters known in the art, such as lasers, light-emitting diodes, etc.

The at least one optical light detector 56 may be configured to detect optical wavelengths and/or optical properties of light exiting the inner volume 16 of the vacuum interrupter 1 via the first and/or second optical interfaces 18, 28 and the at least one optical waveguide 52.

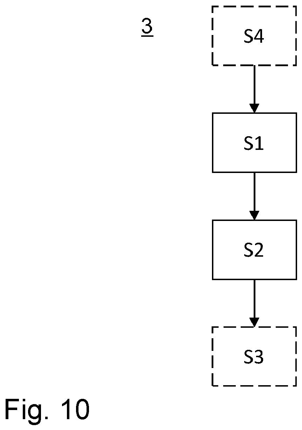

**Fig. 10** shows a flowchart of a method 3 according to the third aspect of the present disclosure. The dashed boxes indicate optional actions of the method 3. The method 3 is thus provided for monitoring a health status of a vacuum interrupter 1 according to any one of the embodiments of the first aspect of the disclosure, in a transformer arrangement 2 according to any one of the embodiments of the second aspect of the disclosure. The method 3 comprises:
- detecting S1, by the monitoring unit 48, an optical status signal from the inner volume 16 of the vacuum interrupter 1 via the first optical interface 18, or via the second optical interface 28, and via the at least one optical waveguide 52, and
- determining S2, by the monitoring unit 48, a property of the optical status signal to determine a health status of the vacuum interrupter 1.

The optical status signal is thus an optical signal which exits the inner volume 16 of the vacuum interrupter 1, and which is detected by the monitoring unit 48. The optical status signal comprises an optical property that is of interest for indicating the status, or health, of the vacuum interrupter 1. The monitoring unit 48 determines the property of the optical status signal. Depending on the property, the optical status signal may provide various indications on the status, or health, of the vacuum interrupter 1. The property, which is determined by the monitoring unit 48, may for instance be optical intensity, wavelength, transmission coefficient, polarity, etc.

If the property of the optical status signal is intensity of white light wavelengths, The method 3 may further comprise registering and counting S3, by the monitoring unit 48, the occurrence of the optical status signal. White light intensity may be an indication that an arc has occurred. The occurrence of the arc should be registered and counted since the number of arcs may indicate the status, or health, of the vacuum interrupter.. The method may require the intensity to exceed a predetermined intensity threshold in order to determine arcing. However, the intensity threshold may be set relatively low since the likelihood of other white light phenomena in the inner volume 16 of the vacuum interrupter 1 is very low.

The method 3 may further comprise emitting S4, by the monitoring unit 48, an optical monitoring signal into the inner volume 16 of the vacuum interrupter 1 via the at least one optical waveguide 52 and via the first optical interface 18. The emitted optical monitoring signal may enter the inner volume 16 via the first optical interface 18, to be reflected by the optically reflective element 30 and to exit the inner volume 16 via the first optical interface 18 **(****Fig. 8****).** Alternatively, the emitted optical monitoring signal may enter the inner volume 16 via the first optical interface 18 to propagate via the optical guide 22 to exit the inner volume 16 via the second optical interface 28 **(****Fig. 7****).** The optical monitoring signal may be emitted continuously or intermittently.

The action of determining S2, by the monitoring unit 48, a property of the optical status signal may comprise determining a property of a returned monitoring signal from the inner volume 16. The optical status signal may thus be a returned optical monitoring signal. A known property of the emitted optical monitoring signal may be compared to a corresponding property of the returned optical monitoring signal. A change in the property may indicate a change in the vacuum interrupter 1. The housing 12 of the vacuum interrupter 1 may, for instance, have been flooded by oil due to a breach of the housing 12. The returned optical monitoring signal would thus have propagated in oil along the optical guide 22, as compared to propagation through near vacuum of an intact vacuum interrupter 1.

The method 3 may further comprise generating, by the monitoring unit 48 an alert of a leakage of the housing 12 of the vacuum interrupter if the property of the returned optical monitoring signal matches a predetermined value or exceeds a threshold value.

Such an alert may for instance be an indication on a display, generation of an audible signal, a notification to a handheld communications device, etc. The threshold value may be selected to ensure that the property change indicates a leakage of the housing of the vacuum interrupter.

The property of the returned optical monitoring signal may be a transmission coefficient of the emitted optical monitoring signal. A changed transmission coefficient indicates that the emitted monitoring signal has propagated through a medium different from the waveguide or the near vacuum of the inner volume of the housing of the vacuum interrupter. The transmission coefficient of the emitted monitoring signal may be known or calculated, i.e. predetermined. If the determined property is the transmission coefficient and it matches the predetermined value oil, the inner volume 16 may be flooded.

As outlined above and as indicated by **Fig. 10****,** the method 3 may comprise monitoring occurrences of arcs in the inner volume 16 and/or monitoring of the vacuum of the vacuum interrupter 1 by detecting a leak in the housing 12. The former method is passive monitoring of light emissions generated by arcs by determining a property of the light emitted from the inner volume 16. The latter method comprises actively emitting a monitoring signal and determining a property of the returned monitoring signal.

The present invention is not limited to the embodiments disclosed but may be varied and modified within the scope of the following claims.

## Claims

1. A vacuum interrupter (1) for an on-load tap changer (10), the vacuum interrupter (1) comprising:
- a housing (12) arranged on an axis (z), said housing comprising a wall (14) enclosing a hermetically sealed inner volume (16),
**characterised in that** the wall (14) of the housing (12) comprises a first optical interface (18) between the inner volume (16) and an outer environment (20) external to the housing (12), the first optical interface (18) being configured to be transparent to at least one optical wavelength.

2. The vacuum interrupter (1) according to claim 1, wherein the inner volume (16) further comprises an optical guide (22) being open to an environment of the inner volume (16) and having a first guide end (24) and a second guide end (26), at least the first guide end (24) being optically connected to the at least one optical interface (18).

3. The vacuum interrupter (1) according to claim 2, wherein the second guide end (26) comprises an optically reflective element (30).

4. The vacuum interrupter (1) according to claim 2, further comprising a second optical interface (28) between the inner volume (16) and the outer environment (20) external to the housing (12), the second guide end (26) being optically connected to the second optical interface (28).

5. The vacuum interrupter (1) of any one of claims 2-4, wherein the optical guide (22) is arranged recessed in relation to an inner surface (32) of the wall (14) of the housing (12).

6. The vacuum interrupter (1) of any one of the previous claims, further comprising a switch (34) coaxially arranged with the housing (12) on the axis (z) within the inner volume (16) of said housing (12), the switch (34) comprising a first electric contact (36) and a second electric contact (38) movable in relation to each other between an open position and a closed position, the vacuum interrupter (1) further comprising a shield element (40) coaxially arranged with the switch (34), and wherein the shield element (40) is arranged between the switch (34) and the optical guide (22).

7. A transformer arrangement (2) comprising a transformer tank (42), a transformer (46) enclosed in the transformer tank (42), a monitoring unit (48) outside the transformer tank (42), and an on-load tap changer (10) at least partly enclosed in the transformer tank (42), the on-load tap changer (10) comprising at least one vacuum interrupter (1) according to any one of the preceding claims, and wherein the at least first optical interface of the vacuum interrupter (1) is optically connected to the monitoring unit (48) via at least one optical waveguide (52).

8. The transformer arrangement (2) according to claim 7, wherein the monitoring unit (48) comprises at least one optical light emitter (54) and at least one optical light detector (56).

9. A method (3) for monitoring a health status of a vacuum interrupter (1) according to any one of the claims 1-6, in a transformer arrangement (2) according any one of claims claim 7-8, the method comprising:
- detecting (S1), by the monitoring unit (48), an optical status signal from the inner volume (16) of the vacuum interrupter (1) via the first optical interface (18), or via the second optical interface (28), and via the at least one optical waveguide (52), and
- determining (S2), by the monitoring unit (48), a property of the optical status signal to determine a health status of the vacuum interrupter (1).

10. The method (3) according to claim 9, wherein the property of the optical status signal is intensity of white light wavelengths exceeding a predetermined intensity threshold, registering and counting (S3), by the monitoring unit (48), the occurrence of the optical status signal.

11. The method (3) according to any one of the claims 9-10, further comprising emitting (S4), by the monitoring unit (48), an optical monitoring signal into the inner volume (16) of the vacuum interrupter (1) via the at least one optical waveguide (52) and via the first optical interface (18),

12. The method (3) according to claim 11, wherein determining (S2) the property of the optical status signal comprises determining a property of a returned monitoring signal from the inner volume (16).

13. The method according to claim 11, further comprising generating, by the monitoring unit (48) an alert if the property of the returned optical monitoring signal matches a predetermined value or exceeds a threshold value.

14. The method (3) according to claim 13, wherein the property of the returned optical monitoring signal is a transmission coefficient of the emitted optical monitoring signal.
